# EUROPÄISCHE PATENTSCHRIFT

(11) **EP 0 881 414 B1**
(45) Veröffentlichungstag und Bekanntmachung des Hinweises auf die Patenterteilung: **19.09.2001**
(21) Anmeldenummer: 98104538.8
(22) Anmeldetag: 13.03.1998
(51) Int. Cl.: F16H 61/00

(54) **Hydraulisch gesteuertes Kegelscheibenumschlingungsgetriebe**
Hydraulically controled belt type transmission with conical pulleys
Transmission de courroie à poulies coniques et à commande hydraulique

(30) Priorität: 30.05.1997 DE 19722825
(43) Veröffentlichungstag der Anmeldung: 02.12.1998
(73) Patentinhaber: P.I.V. Antrieb Werner Reimers GmbH & Co KG, 61352 Bad Homburg (DE)
(72) Erfinder: Heinrich, Johannes, Dr.-Ing., 61381 Friedrichsdorf/Taunus (DE)
(74) Vertreter: Lemcke, Rupert, Dipl.-Ing.

(56) Entgegenhaltungen:
- GB-A- 2 260 379
- US-A- 2 634 086
- US-A- 5 337 625

## Beschreibung

Die Erfindung betrifft ein stufenlos einstellbares Kegelscheibengetriebe mit auf An- und Abtriebswelle drehfest angeordneten Paaren von Kegelscheiben, von denen je eine fest mit der Welle verbunden und je eine axial verschiebbar ist, sowie einem zwischen den Kegelscheibenpaaren zur Leistungsübertragung umlaufenden Zugmittelstrang, wobei die verschiebbaren Kegelscheiben zusammen mit wellenfesten Kolben je ein Zylinder-Kolben-Aggregat bilden, dem zur Einstellung und Aufrechterhaltung der Getriebeübersetzung von einer Pumpe bezogenes Druckmittel über ein als Vierkantensteuerschieber ausgebildetes Steuerventil zugeteilt wird, dessen Steuerkolben mit von einem verstellbaren Proportionaldruckminderventil gelieferter Druckflüssigkeit gegen die Wirkung eines ersten Federelementes einstellbar ist.

Getriebe mit hydraulischer Erzeugung der durch die Kegelscheiben auf den Zugmittelstrang ausgeübten Anpreßkräfte sind in ihrer grundsätzlichen Bauform und Funktionsweise z. B. durch die DE-PS 1 264 196 bekannt, wobei dort die Übersetzungseinstellung über mechanische Beeinflussung der Steuerkolbenstellung des Vierkantensteuerventils erfolgt. Eine Weiterbildung solcher Getriebe mit hydraulischer Einstellung des Steuerventils für die Übersetzungseinstellung ergibt sich beispielsweise aus der gattungsgemäßen DE-PS 39 14 792 und ist, soweit vorliegend von Interesse, als Stand der Technik in Figur 1 dargestellt. Dabei wird der den Steuerkolben des Steuerventils gegen die Wirkung eines Federelementes betätigende hydraulische Stelldruck bedarfsgerecht durch ein Proportionaldruckminderventil bestimmt, das von einer Steuer- und Recheneinheit beeinflußt wird, die ihrerseits die zur Steuerung erforderlichen Getriebekenndaten über diese abfühlende Sensoren erhält und in entsprechende elektrische Signale umsetzt.

Bei Getrieben der letztgenannten Art kann es nun zu einem Ausfall des für die Beeinflussung der Stellung des Steuerkolbens erforderlichen Stelldrukkes kommen, beispielsweise durch Fehlfunktion des durch die elektronische Rechen- und Steuereinheit beeinflußten Proportionaldruckminderventils. Dies hat zur Folge, daß der Steuerkolben durch das ihm zugeordneten Federelement in eine entsprechende Endstellung verschoben wird, woraus sich ein Kommando zu einer plötzlichen Änderung der Übersetzungsstellung des Getriebes in eine Extremstellung ergibt. Je nach der hydraulischen Schaltung der Druckleitungen vom Steuerventil zu den an-bzw. abtriebsseitigen Kegelscheiben entsprechend den Erfordernissen im gewünschten Anwendungsfall kann das eine Übersetzungsänderung ins Schnelle oder ins Langsame zur Folge haben. Ist zum Beispiel der Abtrieb mit einer großen trägen Masse verbunden, so würde ein Verstellkommando ins Langsame für die Antriebsseite eine möglicherweise starke Beschleunigung der Antriebsmaschine bedeuten.

Auf einen Kraftfahrzeugantrieb übertragen heißt das, daß das als träge Masse geltende gesamte Fahrzeug bei einer plötzlichen Übersetzungsänderung ins Langsame - vergleichbar bei einem Stufenschaltgetriebe z. B. plötzliches Schalten während der möglicherweise schnellen Fahrt in den ersten Gang - den Motor zu hohen bzw. überhöhten Drehzahlen antreiben würde, was Schäden am Motor sowie am gesamten Antriebsstrang zur Folge haben kann. Darüberhinaus kann ein solcher Fall bei einem Kraftfahrzeug verkehrstechnische Folgen insoweit haben, als das Fahrzeug durch das überraschende Abbremsen außer Kontrolle geraten kann und zusätzlich Fehlreaktionen des Fahrers mit entsprechenden Folgen eintreten können.

Eine Verstellung ins Schnelle hingegen kann zu einer Überlastung an Teilen des Antriebsstranges führen, wenn die Antriebsmaschine z. B. eine im Netz hängende Synchronmaschine ist.

Auch eine Kombination der vorstehend herausgegriffenen Anwendungsfälle ist denkbar, bei denen sowohl auf der Antriebsseite als auch auf der Abtriebsseite große träge Massen angeordnet sind.

Aufgabe der Erfindung ist es, ein Getriebe der eingangs genannten Art derart weiterzubilden, daß ein durch einen Ausfall des Stelldruckes am Steuerventil bedingtes plötzliches Verstellkommando zu einer Extremübersetzungsstellung des Getriebes hin verhindert und die eingestellte Übersetzung möglichst beibehalten bzw. in einer vorherbestimmbaren Weise so verändert wird, daß keine Überlastung von Bauteilen bzw. andere der vorstehend geschilderten Nachteile bzw. Gefahrenzustände eintreten können.

Diese Aufgabe ist ausgehend von einem Getriebe der eingangs genannten Art erfindungsgemäß dadurch gelöst, daß durch die Druckflüssigkeit gleichzeitig ein verschiebbarer Positionierkolben mit gegenüber dem Steuerkolben größerer Wirkfläche gegen die Wirkung eines zweiten Federelementes mit gegenüber dem ersten Federelement größerer Federkraft verschoben ist, und daß bei Fortfall des Druckes der Druckflüssigkeit der Steuerkolben durch den unter der Wirkung des zweiten Federelementes verschobenen Positionierkolben in einer vorgegebenen Stellung gegen die Wirkung des ersten Federelementes wenigstens mittelbar abgestützt ist.

Diese Maßnahmen haben die Wirkung, daß bei normaler Arbeitsweise, also ordnungsgemäßem Vorhandensein des durch die Druckflüssigkeit auf den Steuerkolben des Vierkantensteuerventils ausgeübten Stelldruckes durch den Druck der Druckflüssigkeit gleichzeitig der Positionierkolben in eine solche Stellung gegen die Wirkung des zweiten Federelementes verschoben ist, daß der Steuerkolben unbeeinträchtigt seine übliche Funktion wahrnehmen kann. Fällt der Druck der Druckflüssigkeit fort oder sinkt auf einen entsprechend niedrigen Wert ab, so wird durch Wirkung des zweiten Federelementes der Positionierkolben verschoben und kann den Steuerkolben gegen die Wirkung des ersten Federelementes in einer solchen Stellung festhalten, die zu einer beispielsweise mittleren Übersetzungsstellung des Getriebes führt, bei der die Gefahr von Schäden der geschilderten Art nicht besteht.

Die für den Druckausfall geschilderte Positionierung des Steuerkolbens kann sich in vorherbestimmbarer Weise aus dem dann vorhandenen Gleichgewicht zwischen den von den beiden Federelementen ausgeübten Kräften ergeben. Zweckmäßig und besonders betriebssicher ist jedoch nach einer ersten Bauform, daß der Positionierkolben in Stellrichtung des Steuerkolbens neben diesem angeordnet und durch die Druckflüssigkeit vom Steuerkolben fort verschoben ist, daß der Positionierkolben bei Fortfall des Druckes durch das zweite Federelement gegen einen Anschlag gedrückt ist, und daß der Positionierkolben einen dann die Stellung des Steuerkolbens bestimmenden zentralen Fortsatz aufweist. Hier sind also Positionierkolben und Steuerkolben miteinander fluchtend angeordnet. Bei Fortfall des Druckes der Druckflüssigkeit fährt der Positionierkolben gegen einen definierten Anschlag und bildet dabei gleichzeitig durch seinen zentralen Fortsatz einen Anschlag, gegen den der Steuerkolben unter der Wirkung des ersten Federelementes fahren kann.

Nach einer zweiten Bauform kann vorgesehen sein, daß der Positionierkolben vom Steuerkolben entfernt angeordnet ist, daß die Stellung des Positionierkolbens über einen Hebel und zwischengeschaltete Verbindungsglieder auf den Steuerkolben übertragbar ist, daß bei durch die Druckflüssigkeit gegen die Wirkung des zweiten Federelementes verschobenem Positionierkolben der Steuerkolben frei bewegbar ist, daß der Positionierkolben bei Fortfall des Druckes durch das zweite Federelement gegen einen wenigstens mittelbar auf den Positionierkolben einwirkenden Anschlag gedrückt ist und daß dann die Stellung des Steuerkolbens durch die hiermit verbundene Stellung von Hebel und Verbindungsgliedern bestimmt ist. In diesem Falle, der aus konstruktiven Gründen wünschenswert sein kann, läßt sich also der Positionierkolben z. B. seitlich neben dem Steuerkolben anordnen und es kann seine Stellung durch den Hebel und die Verbindungsglieder auf den Steuerkolben übertragen werden, wenn der Positionierkolben wegen Fortfall der Druckflüssigkeit durch Wirkung des zweiten Federelementes gegen den Anschlag fährt. Dabei ist nur dafür Sorge zu tragen, daß bei unter dem Druck der Druckflüssigkeit stehendem Positionierkolben und dessen gegen die Wirkung des zweiten Federelementes verschobener Stellung die aus Hebel und Verbindungsgliedern bestehenden Übertragungselemente am Ende soviel Abstand gegenüber dem Steuerkolben haben, daß sich dieser für seine normale Arbeitsweise frei bewegen kann.

Nach der Erfindung ist es weiter zweckmäßig, daß der Anschlag und/oder der Fortsatz bzw. wenigstens eines der Verbindungsglieder in Stellrichtung des Positionierkolbens verstellbar ist. Damit ist eine einfache Möglichkeit eröffnet, die bei Druckausfall sich ergebende Stellung des Steuerkolbens je nach Einsatzfall des Getriebes so zu justieren, daß sich damit eine erstrebenswerte Übersetzungsstellung des Getriebes verbindet. In diesem Zusammenhang hat die vorstehend als zweite Bauform beschriebene Konstruktion den Vorteil, daß man die Verstellbarkeit des Anschlages für den Positionierkolben leichter von außerhalb des Getriebes zugänglich machen kann.

Insbesondere für die vorstehend als erste Bauform beschriebene Konstruktion ist es schließlich zweckmäßig, wenn Steuerkolben, Positionierkolben und Anschlag in einem gemeinsamen Ventilgehäuse verschiebbar bzw. verstellbar angeordnet sind.

Weitere erfindungswesentliche Merkmale und Einzelheiten ergeben sich aus der nachfolgenden Beschreibung einer Ausführungsform, die auf der Zeichnung dargestellt ist. In der Zeichnung zeigen
- Figur 1: die vereinfachte Darstellung eines bekannten Kegelscheibengetriebes mit hydraulischer Betätigung der verschiebbaren Kegelscheiben und elektrohydraulischer Steuerung der Getriebeübersetzung;
- Figur 2: eine Einzelheit aus Figur 1 mit Darstellung des Erfindungsgegenstandes und
- Figur 3: die Einzelheit aus Figur 1 mit Darstellung einer weiteren Ausführungsform der Erfindung.

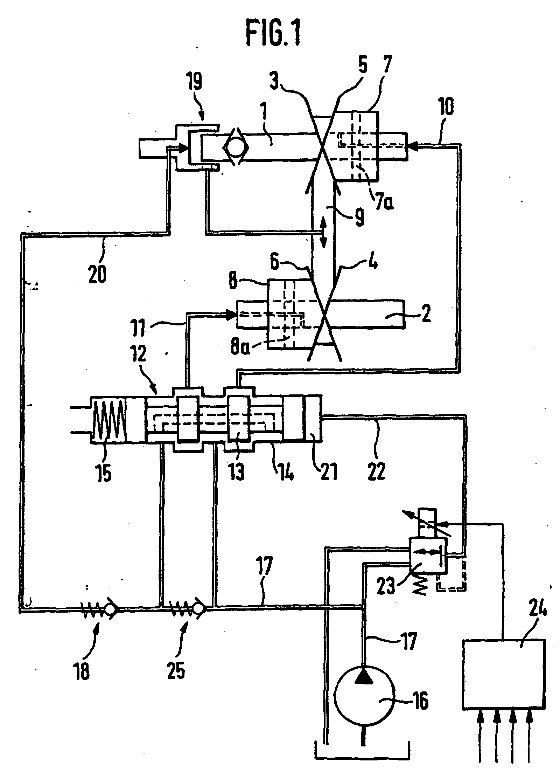

Figur 1 zeigt ein stufenlos übersetzungseinstellbares Kegelscheibengetriebe mit auf zwei parallelen Wellen 1 und 2 angeordneten Scheibensätzen mit je einer mit der Welle fest verbundenen Kegelscheibe 3 bzw. 4 sowie mit gegenüber den Wellen drehfesten aber axial verschiebbaren Kegelscheiben 5 und 6, die über jeweils zugehörige Druckzylinder 7 und 8 mit wellenfesten Kolben 7a und 8a betätigt werden. Beide Kegelscheibenpaare sind durch ein zwischen ihnen umlaufendes Zugmittel 9 kraftschlüssig miteinander verbunden. Über Leitungen 10 und 11 wird den Druckzylindern 7 und 8 Druckmittel von einem Steuerventil 12 zugeführt. Dieses Steuerventil 12 ist in bekannter Weise als sogenannter Vierkantensteuerschieber ausgeführt, wobei ein Steuerkolben 13 in einem entsprechenden Gehäuse 14 axial beweglich ist und sich gegen ein Federelement 15 abstützt. Dieses Steuerventil 12 wird von einer Pumpe 16 über eine Leitung 17 mit Druckmittel versorgt. Getriebe der vorgenannten Bauart besitzen üblicherweise zur Aufrechterhaltung eines gewünschten Grunddruckes ein Vorspannventil 18, das mit einem nachgeschalteten Drehmomentfühler 19 über eine Leitung 20 den Hydraulikabfluß bilden kann. Die Arbeitsweise eines solchen Getriebes ist allgemein bekannt und soll daher nicht noch einmal im einzelnen beschrieben werden.

Dem Steuerventil 12, das bei 21 als Zylinder-Kolben-Aggregat ausgebildet ist, wird dort zur Steuerung der Aufrechterhaltung bzw. Änderung der Getriebeübersetzung über eine Leitung 22 bedarfsgerecht Druckmittel durch ein Proportionaldruckminderventil 23 zugeführt, das seinerseits Druckmittel von der Pumpe 16 erhält. Das Proportionaldruckminderventil 23 wird von einer Steuer- und Recheneinheit 24 gesteuert, die ihre erforderlichen Informationen über nicht dargestellte Sensoren erhält und in Form von elektrischen Signalen an das Ventil 23 weiterleitet.

Üblicherweise ist im Hydraulikkreislauf noch ein Differenzdruckventil 25 vorgesehen.

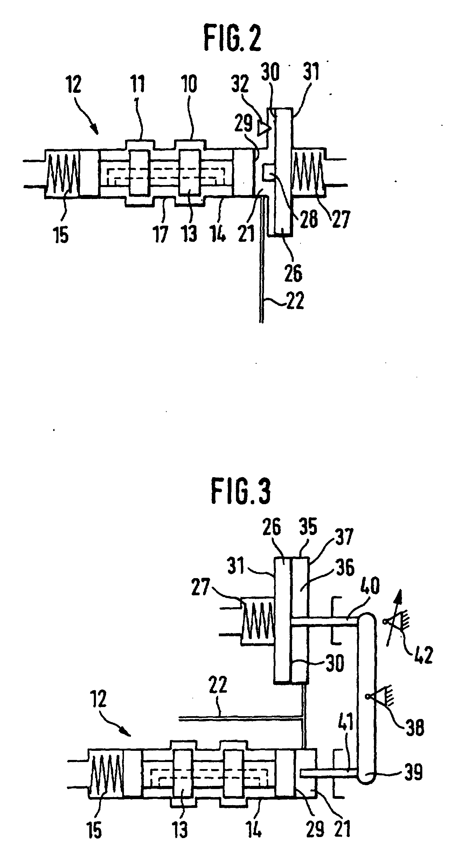

Figur 2 zeigt das in erfindungsgemäßer Weise abgewandelte Steuerventil 12 entsprechend der Figur 1, bei dem auf der der Feder 15 in Axialrichtung gegenüberliegenden Seite des Steuerkolbens 13 ein gegenüber dem Steuerkolben 13 im Durchmesser vergrößerten Positionierkolben 26 im Ventilgehäuse 14 verschiebbar angeordnet ist, der von einer Feder 27 mit einer gegenüber der Feder 15 erhöhten Federkraft in Richtung auf den Steuerkolben 13 hin belastet ist. Beide Federn 15 und 27 sind im übrigen mit ihren dem Steuerkolben 13 bzw. dem Positionierkolben 26 abgewandten Ende am Ventilgehäuse 14 abgestützt.

Der Positionierkolben 26 besitzt einen auf den Steuerkolben 13 zu gerichteten zentralen Fortsatz 28. In gegenüber der Figur 1 abgewandelter Form ist hier bei 21 ein Doppel-Zylinder-Kolben-Aggregat entstanden, dem über die Leitung 22 das der Steuerung dienende Druckmittel durch das Proportionaldruckminderventil 23 zugeführt wird.

Die vom Steuerdruck beaufschlagten Kolbenflächen 29 und 30 von Steuerkolben 13 bzw. Positionierkolben 26 sowie die zugehörigen Federelemente 15 und 27 sind so ausgelegt, daß im festgelegten Arbeitsbereich der Positionierkolben 26 am Zylinderboden 31 anliegt. Der Abstand zwischen zentralem Fortsatz 28 des Positionierkolbens 26 und der Kolbenfläche 29 des Steuerkolbens 13 ist derart gewählt, daß der Steuerkolben 13 seine arbeitsbedingten Axialbewegungen ungehindert ausüben kann.

Bei Ausfall des von dem Proportionaldruckminderventil 23 gelieferten Steuerdruckes beginnt sich der Positionierkolben 26 bei Unterschreitung des minimal vorgesehenen Steuerdruckes unter der Kraft des Federelementes 27 in Richtung auf den Steuerkolben 13 zuzubewegen, der sich seinerseits unter der Kraft des Federelementes 15 auf den Positionierkolben 26 zuzubewegen beginnt, wobei sich eine Endposition einstellt, die bestimmt ist durch die Anlage des Positionierkolbens 26 an einem am Ventilgehäuse 14 angeordneten Anschlag 32.

Diese Position ist zweckmäßigerweise etwa die mittlere Position, die auch vom Steuerkolben 13 bei einer konstanten Übersetzungsstellung, d. h. ohne daß momentan verstellt wird, und einem mittleren Belastungszustand eingenommen wird.

Da die Steuerkolben von Vierkantensteuerschiebern bekanntlich einer sehr genauen Abstimmung ihrer Steuerkanten mit denen im Gehäuse bedürfen, ist es erforderlich, den Anschlag 32 wiederum sehr genau auf die Steuerkantenposition abzustimmen. Bei den üblichen Fertigungstoleranzen würde diese Abstimmung einen wirtschaftlich nur schwer vertretbaren Fertigungsaufwand bedeuten. Um dem zu begegnen, wird der Anschlag 32 frei einstellbar gestaltet und während eines Probelaufs vor Inbetriebnahme auf den gewünschten Wert justiert.

Alternativ läßt sich auch der Fortsatz 28 in axialer Richtung einstellbar ausführen.

Figur 3 zeigt eine Abwandlung des Gegenstandes gemäß Figur 2, wobei sich wiederholende Teile mit den bereits eingeführten Bezugszeichen versehen sind.

Der Gegenstand gemäß Figur 3 weicht im wesentlichen davon ab, daß nunmehr der Positionierkolben 26 in einem gesonderten Gehäuse 35 verschiebbar angeordnet ist, das seitlich neben dem Ventilgehäuse 14 des Steuerkolbens 13 liegt. Über die Leitung 22 wird das der Steuerung dienende Druckmittel in der bereits beschriebenen Weise sowohl dem Zylinderraum 21 des Steuerventils 12 als auch dem Zylinderraum 36 für den Positionierkolben 26 zugeführt. Unter diesem Druckmitteldruck befindet sich normalerweise wieder der Positionierkolben 26 gegen die Wirkung des zweiten Federelementes 27 in Anlage am Zylinderboden 31.

Bei Ausfall des über die Leitung 22 bezogenen Druckmittels bewegt sich der Positionierkolben 26 unter der Wirkung des zweiten Federelementes 27 in Richtung auf den ihm gegenüberliegenden Zylinderboden 37. Um diese Bewegung zur Positionsbestimmung des sich unter der Wirkung des ersten Federelementes 15 bewegenden Steuerkolbens 13 zu nutzen, dient ein an einem festen Lager 38 schwenkbarer Stellhebel 39, dessen eines Ende über ein Verbindungsglied 40 gegen den Positionierkolben 26 geht und dessen anderes Ende über ein Verbindungsglied 41 dann den Anschlag für den Steuerkolben 13 bildet, der beim Gegenstand der Figur 2 durch den Fortsatz 28 dargestellt war.

Um auch hier die Bewegung des Positionierkolbens bei Fortfall des Druckmitteldruckes gegen eine definierte, zweckmäßig einstellbare Grenze gehen zu lassen, ist ein einstellbarer Anschlag 42 für das dem Positionierkolben 26 zugeordnete Ende des Hebels 39 vorgesehen, der nunmehr an einer Stelle sitzt, die leicht von außerhalb z. B. eines Getriebegehäuses zugänglich gemacht werden kann.

Die Darstellung gemäß Figur 3 zeigt die Steuerung in einem Zustand, bei der der über die Leitung 22 kommende Druckmitteldruck in ordnungsgemäßer Weise besteht, das Steuerventil 12 sich also unter normalen Arbeitsbedingungen befindet. Hier ist es, wie aus der Zeichnung ersichtlich, wesentlich, daß sich der Steuerkolben 13 innerhalb seines Arbeitsbereiches ungehindert bewegen kann, weshalb zwischen Verbindungsglied 41 und dem diesem zugeordneten Ende des Steuerkolbens 13 ein entsprechender Abstand vorhanden ist. Dieser Abstand wird bei Fortfall des über die Leitung 22 anstehenden Druckmitteldruckes durch die Bewegung des Positionierkolbens 26 in dem durch die Einstellung des Anschlages 42 gewünschten Maße aufgezehrt, womit dann die Position des Verbindungsgliedes 41 und damit die Anschlagstellung für die Kolbenfläche 29 des durch die Feder 15 bewegten Steuerkolbens 13 entsteht.

## Patentansprüche

1. Stufenlos einstellbares Kegelscheibengetriebe mit auf An- (1) und Abtriebswelle (2) drehfest angeordneten Paaren von Kegelscheiben (3 bis 6), von denen je eine (3, 4) fest mit der Welle (1, 2) verbunden und je eine (5, 6) axial verschiebbar ist, sowie einem zwischen den Kegelscheibenpaaren zur Leistungsübertragung umlaufenden Zugmittelstrang (9), wobei die verschiebbaren Kegelscheiben (5, 6) zusammen mit wellenfesten Kolben (7a, 8a) je ein Zylinder-Kolben-Aggregat (7, 8) bilden, dem zur Einstellung und Aufrechterhaltung der Getriebeübersetzung von einer Pumpe (16) bezogenes Druckmittel über ein als Vierkantensteuerschieber ausgebildetes Steuerventil (12) zugeteilt wird, dessen Steuerkolben (13) mit von einem verstellbaren Proportionaldruckminderventil (23) gelieferter Druckflüssigkeit gegen die Wirkung eines ersten Federelementes (15) einstellbar ist,
**dadurch gekennzeichnet,**
**daß** durch die Druckflüssigkeit gleichzeitig ein verschiebbarer Positionierkolben (26) mit gegenüber dem Steuerkolben (13) größerer Wirkfläche gegen die Wirkung eines zweiten Federelementes (27) mit gegenüber dem ersten Federelement (15) größerer Federkraft verschoben ist, und daß bei Fortfall des Druckes der Druckflüssigkeit der Steuerkolben (13) durch den unter der Wirkung des zweiten Federelementes (27) verschobenen Positionierkolben (26) in einer vorgegebenen Stellung gegen die Wirkung des ersten Federelementes (15) wenigstens mittelbar abgestützt ist.

2. Kegelscheibengetriebe nach Anspruch 1,
**dadurch gekennzeichnet,**
**daß** der Positionierkolben (26) in Stellrichtung des Steuerkolbens (13) neben diesem angeordnet und durch die Druckflüssigkeit vom Steuerkolben (13) fort verschoben ist, daß der Positionierkolben (26) bei Fortfall des Druckes durch das zweite Federelement (27) gegen einen Anschlag (32) gedrückt ist, und daß der Positionierkolben (26) einen dann die Stellung des Steuerkolbens (13) bestimmenden zentralen Fortsatz (28) aufweist.

3. Kegelscheibengetriebe nach Anspruch 1,
**dadurch gekennzeichnet,**
**daß** der Positionierkolben (26) vom Steuerkolben (13) entfernt angeordnet ist, daß die Stellung des Positionierkolbens (26) über einen Hebel (39) und zwischengeschaltete Verbindungsglieder (40, 41) auf den Steuerkolben (13) übertragbar ist, daß bei durch die Druckflüssigkeit gegen die Wirkung des zweiten Federelementes (27) verschobenem Positionierkolben (26) der Steuerkolben frei bewegbar ist, daß der Positionierkolben (26) bei Fortfall des Druckes durch das zweite Federelement (27) gegen einen wenigstens mittelbar auf den Positionierkolben (26) einwirkenden Anschlag (42) gedrückt ist, und daß dann die Stellung des Steuerkolbens (13) durch die hiermit verbundene Stellung von Hebel (39) und Verbindungsgliedern (40, 41) bestimmt ist.

4. Kegelscheibengetriebe nach Anspruch 2 oder 3,
**dadurch gekennzeichnet,**
**daß** der Anschlag (32, 42) und/oder der Fortsatz (28) bzw. wenigstens eines der Verbindungsglieder (40, 41) in Stellrichtung des Positionierkolbens (26) verstellbar ist.

5. Kegelschreibengetriebe nach einem der Ansprüche 1, 2 oder 4,
**dadurch gekennzeichnet,**
**daß** Steuerkolben (13), Positionierkolben (26) und Anschlag (32) in einem gemeinsamen Ventilgehäuse verschiebbar bzw. verstellbar angeordnet sind.

## Claims

1. Infinitely variable cone pulley gear having pairs of cone pulleys (3 to 6) arranged on a drive shaft (1) and a driven shaft (2) so as to rotate therewith, one of which (3, 4) is rigidly connected to the shaft (1, 2) and one of which (5, 6) is axially displaceable, and having a traction cable (9) circulating between the pairs of cone pulleys for transmitting the power, the displaceable cone pulleys (5, 6) each forming together with a piston (7a, 8a), which is fixed to the shaft, a cylinder-piston assembly (7, 8) which, for the purpose of adjusting and maintaining the gear transmission, is supplied with pressure medium, drawn from a pump (16), *via* a control valve (12) constructed in the form of a square distributing slide valve, the control piston (13) of which is adjustable against the action of a first spring element (15) by means of pressure fluid delivered by an adjustable proportional pressure-reducing valve (23),
**characterised in that**
at the same time a displaceable positioning piston (26) having a working surface that is larger than the control piston (13) is displaced by means of the pressure fluid against the action of a second spring element (27) having a greater spring force than the first spring element (15); and, in the event of a fall in the pressure of the pressure fluid, the control piston (13) is at least indirectly supported in a predetermined position, against the action of the first spring element (15), by the positioning piston (26) displaced under the action of the second spring element (27).

2. Cone pulley gear according to claim 1,
**characterised in that**
the positioning piston (26) is arranged alongside the control piston (13) in the working direction thereof and is displaced away from the control piston (13) by the pressure fluid; in the event of a fall in the pressure the positioning piston (26) is pressed against a stop (32) by the second spring element (27); and the positioning piston (26) has a central extension (28) which then determines the position of the control piston (13).

3. Cone pulley gear according to claim 1,
**characterised in that**
the positioning piston (26) is arranged remote from the control piston (13); the position of the positioning piston (26) can be transmitted to the control piston (13) *via* a lever (39) and intermediate connecting members (40, 41); when the positioning piston (26) has been displaced by the pressure fluid against the action of the second spring element (27), the control piston is freely movable; in the event of a fall in the pressure the positioning piston (26) is pressed by the second spring element (27) against a stop (42) which acts at least indirectly on the positioning piston (26), and in that event the position of the control piston (13) is determined by the associated position of lever (39) and connecting members (40, 41).

4. Cone pulley gear according to claim 2 or 3,
**characterised in that**
the stop (32, 42) and/or the extension (28) or at least one of the connecting members (40, 41) are adjustable in the working direction of the positioning piston (26).

5. Cone pulley gear according to any one of claims 1, 2 and 4,
**characterised in that**
the control piston (13), positioning piston (26) and stop (32) are displaceably or adjustably arranged in a common valve housing.

## Revendications

1. Transmission à poulies coniques à réglage continu avec des paires de poulies coniques (3 à 6) disposées de façon fixe en rotation sur un arbre primaire (1) et un arbre secondaire (2), parmi lesquelles chaque paire de poulies (3, 4) est fixée de façon fixe à l'arbre (1, 2) et chaque paire de poulies (5, 6) est déplaçable axialement, ainsi qu'avec une courroie de traction (9) qui tourne autour des paires de poulies coniques pour la transmission de puissance, les paires de poulies coniques déplaçables (5, 6) formant conjointement avec le piston solidaire avec l'arbre (7a, 8a) respectivement un agrégat cylindre-piston (7, 8), auquel est communiqué, pour le réglage et le maintien de la transmission par engrenage d'une pompe (16), un fluide sous pression spécifique via une soupape de commande conçue sous forme d'une soupape de commande carrée (12), dont le piston de commande (13) peut être réglé avec un liquidé sous pression délivré par un détendeur proportionnel de pression (23) contre l'effet d'un premier élément de ressort (15), **caractérisée en ce qu'**un piston de positionnement déplaçable (26) présentant une surface active supérieure à celle du piston de commande (13) est déplacé simultanément par l'intermédiaire du liquide sous pression contre l'effet d'un second élément de ressort (27) présentant une élasticité supérieure à celle du premier élément de ressort (15), et en ce qu'en cas de baisse progressive de la pression du liquide sous pression, le piston de commande (13) est calé, au moins indirectement, dans une position prédéterminée contre l'effet du premier élément de ressort (15), par l'intermédiaire du piston de positionnement (26) déplacé sous l'effet du second élément de ressort (27).

2. Transmission à poulies coniques selon la revendication 1, **caractérisée en ce que** le piston de positionnement (26) est disposé à côté du piston de commande (13) dans le sens du réglage de celui-ci et qu'il est calé par le piston de commande (13) via le liquide sous pression, en ce que le piston de positionnement (26) en cas de baisse progressive de la pression est comprimé, par l'intermédiaire du second élément de ressort (27), contre une butée (32), et en ce que le piston de positionnement (26) comporte un prolongement central (28) qui détermine alors la position du piston de commande (13).

3. Transmission à poulies coniques selon la revendication 1, **caractérisée en ce que** le piston de positionnement (26) est disposé de façon à être éloigné du piston de commande (13), en ce que la position du piston de positionnement (26) est transmissible au piston de commande (13) via un levier (39) et des éléments de raccordement intercalés (40, 41), en ce que, lorsque le piston de positionnement (26) est repoussé pour contrer l'effet du second élément de ressort (27), le piston de commande peut être librement déplacé, en ce que le piston de positionnement (26), en cas de baisse progressive de la pression, est comprimé, par l'intermédiaire du second élément de ressort (27), contre une butée (42) agissant au moins indirectement sur le piston de positionnement (26), et en ce que la position du piston de commande (13) est déterminée par la position du levier (39) et des éléments de raccordement (40, 41) ainsi associés.

4. Transmission à poulies coniques selon la revendication 2 ou 3, **caractérisée en ce que** la butée (32, 42) et/ou le prolongement (28) ou, selon les cas, au moins l'un des éléments de raccordement (40, 41) sont réglables dans le sens du réglage du piston de positionnement (26).

5. Transmission à poulies coniques selon l'une des revendications 1, 2 ou 4, **caractérisée en ce que** le piston de commande (13), le piston de positionnement (26) et la butée (32) sont disposés de façon déplaçable et/ou réglable dans une cage de soupape commune.
